# EUROPEAN PATENT APPLICATION

(11) **EP 1 531 354 A1**
(43) Date of publication of application: **18.05.2005**
(21) Application number: 03078561.2
(22) Date of filing: 11.11.2003
(51) Int. Cl.: G02C 1/02

(54) **Rimless spectacles and hinge pieces for rimless spectacles**

(71) Applicant: Grove, Anders, 8220 Braband (DK); Tybring, Eva, 8220 Braband (DK); Maerkedal, Dorte, 8520 Lystrup (DK); Hartvig, Christian, 8520 Lystrup (DK)
(72) Inventor: Grove, Anders, 8220 Braband (DK)
(74) Representative: Schmidt, Jens Joergen

(57) **Abstract**

Rimless spectacles and hinge pieces are disclosed, where the hinge pieces each comprises an abutment part having an abutment surface extending parallel to and in substantial abutment with a side surface of the respective lens and at least two corresponding pins, that are fastened to the abutment part and extend into corresponding holding holes of the lenses. The pins are rigidly connected to the inner side surfaces of the corresponding holes, e.g. by gluing or by a close fit, preferably an interference fit, so that the pins substantially are prevented from gaining an angular displacement relatively to the holes in the lens.

The two pins form together with the abutment part a three-sided contact area between the hinge piece and the lens, preferably a substantially unbroken contact area, i.e. that the pins extends from the abutment surface itself. A force or torque applied to the hinge piece is distributed over this contact area, since the construction substantially prevents any mutual movements or displacements between the hinge piece and the lens, and the stresses are consequently distributed and fatal stress concentrations leading to damages and fractures of the lens are avoided.

## Description

The present invention relates to rimless spectacles in which the hinge pieces are fastened to the respective lenses in a way to reduce stress concentrations in the lenses. The invention also relates to spectacle hinge pieces suitable for this purpose.

### BACKGROUND

Rimless spectacles have been known for many years, in which the bridge piece interconnecting the lenses and supporting on the nose of the user, as well as the hinge pieces connecting the outer side edges of the lenses with the temples or side bars, are fastened directly to the lenses so that the lenses constitute a construction part of the spectacles instead of being fitted into the rims of a spectacle frame.

A very commonly used means for fastening the hinge piece to the lens is by screw and nut, i.e. by providing screws with a threaded tip through one or more holes in the lens and fastening the screws in place with corresponding female parts on the other side of the lens as disclosed e.g. in US 1,387,898 in which the use of a rivet is disclosed as an alternative. The use of screws in combination with the provision of indentations in the lens to accommodate a part of the hinge piece is disclosed in WO 97/21133, WO 03/040810, WO 01/20388 as well as in WO 03/050595. When the screw is fastened in place by turning of the screw or the female part, a compression force is applied to the area of the lens around the hole. This compression force is in itself not harmful to the lens, but in case the hinge piece is subjected to an excessive extra force, e.g. in case the spectacles are accidentally dropped on the floor, the rupture limit of the lens material is more readily reached, resulting in damages of the lens. A substantially similar result is obtained by the use of rivets instead of screws.

Rimless spectacles in which the hinge piece is clamped on the lens in various ways as disclosed e.g. in US 5,835,183 experience in general the same problem as the screw and nut fastening provided that the claming is strong enough for the hinge piece to remain in place during use of the spectacles. Also in this case, the tension in the lens caused by the compression force from the fastening means lower the ability of the lens to withstand external forces on the hinge piece.

Another means of fastening the hinge piece to the lens is to provide an oblong hole or recess in the lens as well as a corresponding oblong holding part of the hinge piece, formed by bending a strip of an elastic material into a U-shape, so that the holding part is tensioned when accommodated in the oblong hole to hold it in place. Such means are e.g. disclosed in WO 87/04806. This allows for relative movements between the holding part and the hole in the lens, resulting over time in wear on the two parts, whereby the connection will become too loose to fulfil its function. Furthermore, the oblong hole will only be partly filled by the holding part and the open or unfilled part of the hole constitutes a weakening of the strength of the lens as the restraint on the deformation of the lens material is diminished. An impact of a force on the outer edge of the lens near the hole can easily cause a fracture of the lens due to the unfilled part of the hole allowing for deformation of the lens material leading to the fracture.

The hinge pieces may alternatively be fastened to the lens by providing two holes in the lens in which two pins of the hinge piece are inserted from the back side surface of the lens, i.e. the side facing the user, as disclosed e.g. in WO 96/18127, in which the pins are rigidly fastened by gluing or riveting, and in EP 0 762 178, in which the pins are anchored to the lens in an interference fit. In FR 2 723 649 a hinge piece is disclosed in which the pins are inserted from the front side of the lens and fastened by use of an adhesive. The disclosed hinge pieces are made from metal wire of e.g. titanium or alloys containing silver or gold, which is bent into shape of e.g. a bracket. The pins are securely fastened in the holes and are not allowed to obtain an angular displacement relatively to the lens. In case an excessive transverse force is applied to the hinge part relative to the lens, the pins will act as consol beams with the maximum torque found at the root of the pins, which may cause the pin to bend permanently or the lens to fracture where the root of the pin meets the lens.

Yet another known means of fastening the hinge piece to the lens is to provide a resilient grommet or bushing between the hole in the lens and the holding part of the hinge piece as disclosed in US 6,447,117 and in WO 03/050595, so as to retain the holding part within the hole by means of friction and to fill out the hole in the lens. The bushing is made from a softer material than the lens and allows for the holding part to move and turn relatively to the lens to a certain extend without loosing the contact between the holding part, the bushing and the inner side surface of the hole, and the forces from the hinge piece on the lens are distributed by the bushing that prevents severe concentrations of stress in the lens. However, in case a torque is applied to the hinge part relative to the lens and causes the relative angular displacement of the holding part to exceed the limits of the bushing resiliency, then severe stress concentrations will occur at the edges of the hole in the lens provoking the formation of cracks and fractures of the lens.

The hinge pieces of rimless spectacles are subjected to forces within a certain range during normal use and wear of the spectacles, and most of the above solutions to fastening of the hinge pieces to the lenses can be designed to withstand such forces and prevent damages to the lenses or the hinge pieces while keeping a visually acceptable presentation of the spectacles. However, the spectacles of the above discussed design are not able to withstand excessive forces, e.g. in case the spectacles are accidentally dropped on the floor and land on the hinge piece, resulting in permanent damage to the lenses or the hinge pieces.

The main object of the present invention is therefore to provide rimless spectacles in which the hinge pieces are fastened to the lenses in a manner that improves the ability of the spectacles to withstand the effect of excessive forces applied to the spectacles without causing permanent damage to the lenses or the hinge pieces.

The rimless spectacles according to the present invention provides a solution to this, in that the hinge pieces each comprises an abutment part having an abutment surface extending parallel to and in substantial abutment with a side surface of the respective lens and at least two corresponding pins, that are fastened to the abutment part and extend into corresponding holding holes of the lenses. The pins are rigidly connected to the inner side surfaces of the corresponding holes, e.g. by gluing or by a close fit, preferably an interference fit, so that the pins substantially are prevented from gaining an angular displacement relatively to the holes in the lens.

The two holding holes for each hinge piece are substantially parallel in order for the respective hinge piece to be jointed with the respective lens, and the two pins form together with the abutment part a three-sided contact area between the hinge piece and the lens, preferably a substantially unbroken contact area, i.e. that the pins extends from the abutment surface itself. A force or torque applied to the hinge piece, in particularly an excessive force or torque, is distributed over this contact area, since the construction substantially prevents any mutual movements or displacements between the hinge piece and the lens, and the stresses are consequently distributed and fatal stress concentrations leading to damages and fractures of the lens are avoided. The distance between the edges of the two holes, i.e. the thickness of the lens material between the holes, of e.g. 1-3 millimetres increases the strength established by the substantially unbroken contact area between the lens and the hinge piece.

Other advantages of the present invention and particular embodiments thereof will be evident from the following description.

### BRIEF DESCRIPTION OF THE PRESENT INVENTION

The present invention relates in a first aspect to rimless spectacles comprising a pair of lenses, a bridge piece interconnecting the respective lenses, a pair of hinge pieces arranged preferably symmetrically at the outer side edges of the two lenses, and a pair of temples each having a hinge connecting element for connecting each temple to a respective hinge piece,
wherein each hinge piece comprises an abutment part having an abutment surface extending parallel to and in substantial abutment with a side surface of the respective lens, each respective lens is provided with at least two holding holes, which open to said side surface thereof, at least two corresponding pins are fastened to the abutment part of each hinge piece and extend into said holding holes of the lenses, and the pins are rigidly connected to the inner side surfaces of the corresponding holes.

The pins extend preferably from the abutment surface and into the holding holes, so that a substantially unbroken three-sided contact area between the hinge piece and the lens is provided.

The holding holes are typically parallel to facilitate the joining operation of the hinge piece and the lens, and the distance between the edges of the two holes is normally within the range of 2-10 millimetres, preferably within 3-6 millimetres. However, the distance between the edges of the holes may be within a range extending from even smaller distances at the limit of what is technically obtainable to larger distances. It should be noted that the strength of the connection between the lens and the hinge piece will increase with increasing distance between the edges of the two holes.

The side surface of the lens is preferably the front side surface of the respective lens, because the hinge piece in that case protects the outer side edge of the lens from direct impact, e.g. in case the spectacles accidentally are dropped on the floor, and the abutment surface may be of a standardised shape as most lenses have the same standardised curvature of the front side of the lens, whereas the curvature of the back side of the lens facing towards the user's eye varies to vary the compensation offered by the lens.

The holding holes extend in the optimal embodiment from the side surface of the respective lens to the opposite side surface thereof, so that stress concentrations at the bottom of a blind holding hole is prevented. The edge of the inlet opening of the holding hole through which the pin is entered is preferably rounded or chamfered to facilitate the introduction of the pin and to minimise the concentration of stress at that particular position and thereby prevent the formation of cracks and fractures.

The pins may be in a close fit with the corresponding holding holes, in particular in a transition fit or preferably an interference fit. Alternatively, the close fit may be a tapering fit, in particular a conical fit, in which the holding hole as well as the pin is tapered with the same angle.

Thus, the close fit may be an interference fit, typically with a tolerance in the range of -6 to -12 micrometer (i.e. that the dimensions of the pin exceed those of the holding hole with said tolerance), preferably a locational interference fit, such as an H7/p6 fit. However, less tight fits, such as a locational transition fit, e.g. an H7/n6 or an H7/k6 fit, may be applied. Less preferred, but applicable for some embodiments is a location clearance fit, such as an H7/h6 fit. For embodiments that are particularly suited therefore, even a sliding fit, such as an H7/g6 fit, may be applied. The larger area of the abutment part that is in contact with the side of the lens, the less tight the fit may be and still fulfil the function of holding the hinge part together with the lens. A tapering fit, in particular a conical fit is more difficult to manufacture, but a suitable close fit may be obtained with a less difficult assembly. However, the matching tapering or conical surfaces should be prepared with a tolerance corresponding to the above indicated in order to obtain a fit that is sufficiently close for the purpose.

Although the above-indicated tolerances commonly are applied to pins or axles of a cylindrical cross section and corresponding holding holes with an opening of a similar outline, the present invention is not limited to pins and holes of such cross section.

The pins may alternatively or additionally be rigidly connected to the inner side surfaces of the holding holes by providing an adhesive between said pins and the inner side surfaces of the corresponding holes. Furthermore or alternatively, an adhesive may be provided between said abutment surface of the abutment part and said side surface of the respective lens.

In a particular embodiment of the present invention, the hinge pieces are cut from sheet metal, whereby the hinge pieces may be manufactured with inexpensive production methods. At least one of the pins may furthermore be formed integrally with said hinge pieces from a blank of sheet metal as tabs. The tab or tabs may be bent to extend inwardly from the abutment surface of the abutment part, depending on whether the abutment surface of the hinge piece is an edge surface or a side surface of the blank of sheet metal. By the term inwardly is understood towards the lens of the spectacles, which preferably also means towards the user of the spectacles. In a particular embodiment, at least one of said pins is made from metal wire, which is fastened to said abutment part.

Hinge pieces as described and illustrated herein, which are suitable for being arranged at the outer side edge of a spectacle lens and have an abutment surface extending parallel to a surface of the intended lens, which hinge piece is cut from sheet metal and comprises at least one pin or tab, preferably at least two tabs, which extend from said abutment surface and into a corresponding holding hole or holes of the lens opening to said side surface of the lens constitutes in itself an invention according to a second aspect of the present invention. The pin or tab may extend parallel to or perpendicularly to the abutment surface as illustrated in the enclosed description of various embodiments of the present invention. According to one preferred embodiment, the tab or tabs are formed integrally with the hinge piece from a blank of sheet metal, and the tab or tabs may be bend to extend inwardly into the holding hole or holes of the lens.

Each of the lenses may be provided with an indentation in said side surface thereof, so that the surface of which indentation is in abutment with said abutment surface of the respective hinge piece. Thereby a stronger construction and at the same time more pleasant appearance of the spectacles is achieved. The depth of said indentations and the thickness of the hinge pieces are preferably of similar dimensions, so that the outer side surface of the hinge pieces is substantially flush with said side surfaces of the lenses. Thereby, a substantially continuous front surface of the spectacles is obtained leaving no protected space for e.g. bacteria to accumulate and thus facilitating a high hygienic standard of the spectacles, which is advantageous in particular to users in functions requiring as very high hygienic standard, such as medical doctors, nurses, dentists. etc..

The hinge pieces are in another preferred embodiment of the present invention made from
a first metal wire extending parallel to said side surface of the respective lens, the outer end of the first metal wire being bend to form a first pin extending inwardly into a corresponding first holding hole of the lens, and
a second metal wire extending parallel to said first metal wire, the outer end of the second metal wire being bend to form a second pin extending inwardly into the corresponding second holding hole of the lens,
wherein the first metal wire and the second metal wire are fastened to each other along the distance they extend in parallel.

The second metal wire extends preferably between said side surface of the respective lens and said first metal wire, so that the first metal wire generally covers the second metal wire and the hinge piece appears less visible.

The lens may be provided with an indentation as discussed previously dimensioned to accommodate the second metal wire, and the indentation is preferably dimensioned so that the part of the first metal wire extending beyond the second pin to the first pin is in abutment with said side surface of the respective lens.

The present invention relates in a third aspect thereof to such hinge piece comprising a first and a second metal wire as described.

The bridge piece interconnecting the two lenses of the rimless spectacles according to the present invention may correspondingly be fastened to the lenses in one of the ways disclosed herein with respect to the hinge pieces or by any other suitable means with at least two pins extending from an abutment part into at least two corresponding holding holes of each of the lenses. The hinge pieces and the bridge piece of the spectacles are not necessarily fastened to the lenses in the same manner, and suitable combinations of ways of fastening may be employed.

Rimless spectacles in which the bridge piece is fastened to the lenses in one of the same ways as disclosed herein for the hinge pieces may correspondingly be regarded as an invention, regardless of the manner in which the respective hinge pieces are fastened to the lenses, and the bridge pieces suitable for such rimless spectacles may also be regarded as inventions.

### BRIEF DESCRIPTION OF THE FIGURES

Embodiments of the present invention are disclosed in the following with the purpose of illustrating various aspects of the invention with reference to the enclosed drawing, of which
Fig. 1 shows a first embodiment of a lens with a sheet metal hinge piece of spectacles according to the present invention,
Fig. 2 shows a second embodiment of a lens with a sheet metal hinge piece of spectacles according to the present invention,
Fig. 3A shows a third embodiment of a lens with a sheet metal hinge piece of spectacles according to the present invention,
Fig. 3B shows a section through the lens and hinge piece of Fig. 3A,
Fig. 4A shows a fourth embodiment of a lens with a sheet metal hinge piece of spectacles according to the present invention,
Fig. 4B shows a section through the lens and hinge piece of Fig. 4A prior to the jointing thereof,
Fig. 4C shows a section through the jointed lens and hinge piece of Fig. 4A,
Fig. 5A shows a fifth embodiment of a lens with a sheet metal hinge piece of spectacles according to the present invention,
Fig. 5B shows a section through the lens and hinge piece of Fig. 5A,
Fig. 6 shows a sixth embodiment of a lens with a sheet metal hinge piece of spectacles according to the present invention, in which the pins are formed as tabs integrally with the hinge piece,
Fig. 7 shows a seventh embodiment of a lens with a sheet metal hinge piece of spectacles according to the present invention, in which the pins are formed as tabs integrally with the hinge piece, and are bent to extend inwardly into the lens,
Fig. 8 shows an eighth embodiment of a lens with a sheet metal hinge piece of spectacles according to the present invention,
Fig. 9 shows a ninth embodiment of a lens with a sheet metal hinge piece of spectacles according to the present invention,
Fig. 10A shows a tenth embodiment of a lens with a sheet metal hinge piece of spectacles according to the present invention,
Fig. 10B shows a section through the lens and hinge piece of Fig. 10A prior to the jointing thereof,
Fig. 10C shows a section through the jointed lens and hinge piece of Fig. 10A,
Fig. 10D shows the left side of the spectacles with the hinge pieces of Fig. 10A as seen from the front,
Fig. 11A shows an eleventh embodiment of a lens with a sheet metal hinge piece of spectacles according to the present invention,
Fig. 11B shows a section through the lens and hinge piece of Fig. 11A prior to the jointing thereof,
Fig. 11C shows a section through the jointed lens and hinge piece of Fig. 11A,
Fig. 11D shows the left side of the spectacles with the hinge pieces of Fig. 11A as seen from the front,
Fig. 12A shows a twelfth embodiment of a lens with a sheet metal hinge piece of spectacles according to the present invention,
Fig. 12B shows a section through the lens and hinge piece of Fig. 12A prior to the jointing thereof,
Fig. 13 shows a thirteenth embodiment of a lens with a metal wire hinge piece of spectacles according to the present invention,
Fig. 14A shows a fourteenth embodiment of a lens with a metal wire hinge piece of spectacles according to the present invention,
Fig. 14B shows a section through the lens of Fig. 14A,
Fig. 14C shows a section through the jointed lens and hinge piece of Fig. 14A,
Fig. 14D shows the lens of Fig. 14A as seen from the outer edge side thereof, and
Fig. 14E shows the spectacles with the hinge pieces of Fig. 14A as seen from the front.

### DETAILED DESCRIPTION OF EMBODIMENTS OF THE PRESENT INVENTION

Twelve different embodiment of the present invention are shown in the enclosed figures as illustrations of how the present invention may be carried out, without limiting the broad definition of the present invention as disclosed in the accompanying claims.

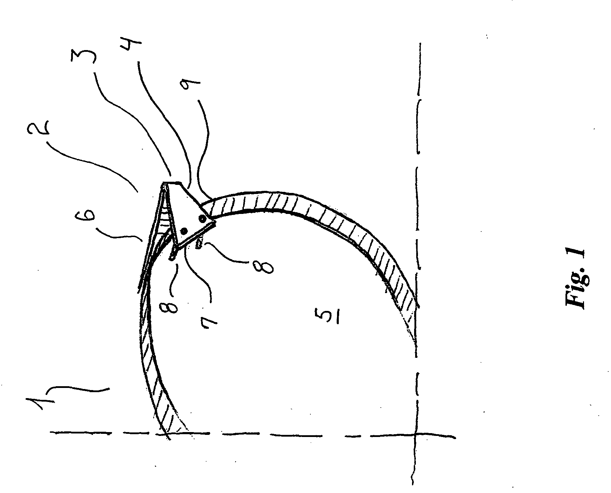

A first embodiment of a lens 1 with a hinge piece 2 of spectacles according to the present invention is shown in Fig. 1, in which the hinge piece 2 is made from a laser cut or punched out piece of sheet metal that provided with a substantially right angled bent 3 so that an abutment part 4 of the hinge piece 2 is parallel with the front side surface 5 of the lens 1 and a hinge carrying part 6 extending towards the back of a user for connecting with a temple of the spectacles. The inner side surface 7 of the abutment part is in abutment with a part of the front side surface 5 of the lens 1, and two pins 8 are fastened, e.g. soldered, glued or welded to the abutment part 4 so that they extend from the abutment surface 7 of the abutment part 4. The pins 8 are in an interference fit with the two corresponding holding holes though the lens 1, so that the abutment part 4 and the two pins 8 form an unbroken three-sided contact between the hinge piece 2 the lens 1. The distance between the two pins 8 is from 3 to 6 millimetres, and the pins 8 are arranged so that the holding holes are situated equidistantly from the outer side edge 9 of the lens 1.

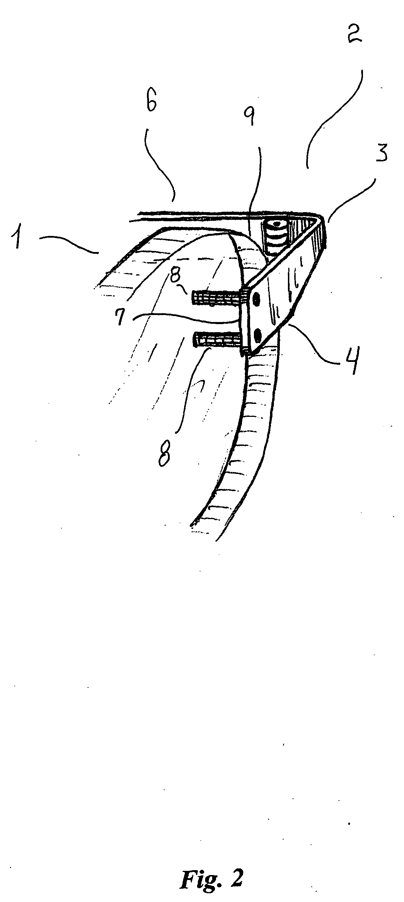

A second embodiment of a lens 1 with a sheet metal hinge piece 2 of spectacles according to the present invention is shown in Fig 2. The deviation from the embodiment of Fig. 1 is that the pins 8 are arranged vertically on line.

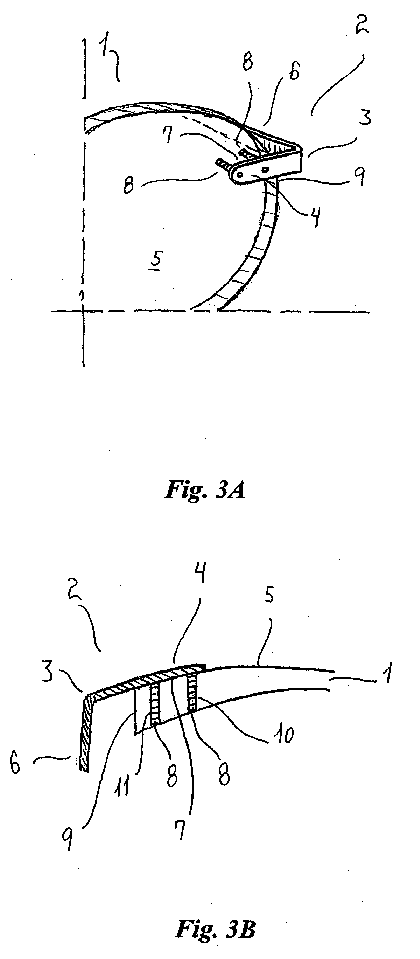

A third embodiment of a lens 1 with a sheet metal hinge piece 2 of spectacles according to the present invention is shown in Figs. 3A and 3B. This embodiment deviates from the two shown in Figs. 1 and 2 in that the pins 8 and the corresponding holding holes 10, 11 are arranged substantially horizontally on line, which in general has been found to be an advantage for spectacles according to the present invention, because the distance from the innermost holding hole 11 to the outer side edge 9 of the lens 1 is maximised and the weakening of the ability of the lens 1 to withstand mechanical stresses is consequently minimised.

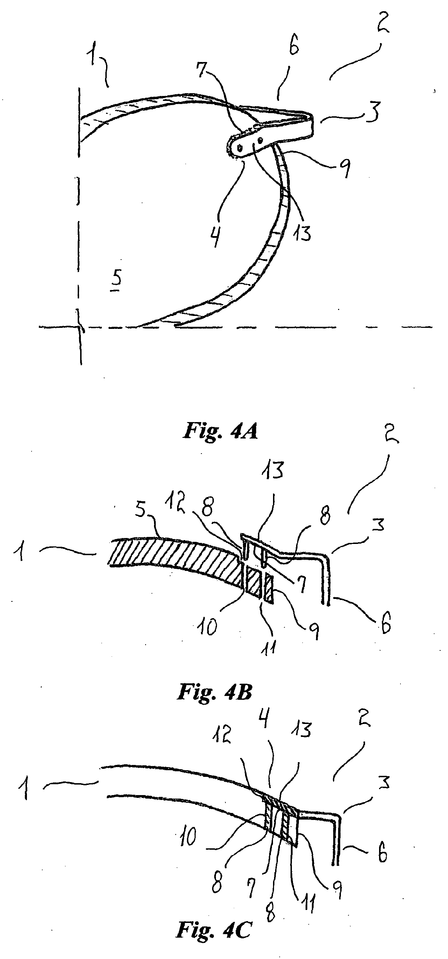

The fourth embodiment shown in Figs. 4A, 4B and 4C of a lens 1 with a sheet metal hinge piece 2 of spectacles according to the present invention deviates from the third embodiment of Figs. 3A and 3B in that the lens 1 is provided with an indentation 12 in the front side surface 5 and the surface of the indentation 12 is in abutment with the abutment surface 7 of the hinge piece 2. The depth of the indentation 12 is of similar dimension as the thickness of the hinge pieces 2, so that the outer side surface 13 of the hinge piece 2 is substantially flush with the front side surface 5 of the lens 1, which is apparent from Fig. 4C.

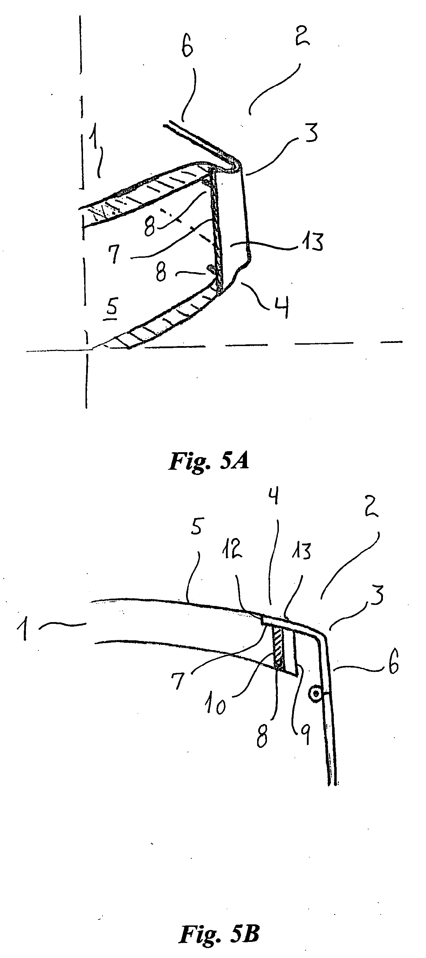

A fifth embodiment of a lens 1 with a sheet metal hinge piece 2 of spectacles according to the present invention is shown in Figs. 5A and 5B. The abutment part 4 extends in the vertical direction in the full height of the lens 1, so that the outer side edge 9 is covered by the hinge piece 2. The two pins 8 are arranged vertically on line.

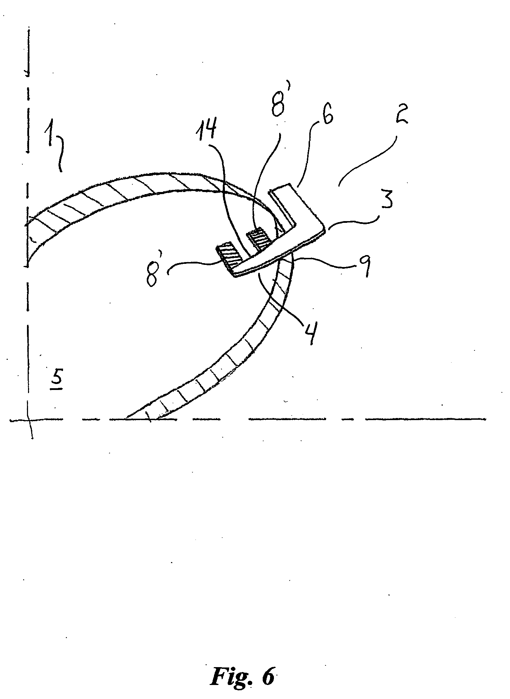

Spectacles with different embodiments of hinge pieces 2 with pins 8' formed integrally from a blank of sheet metal according to the present invention are shown in Figs. 6-10. These pins 8' shown in the embodiments are of a non-round cross-section and the corresponding holding holes 10, 11 are of a corresponding cross-sectional opening, so that substantially no open space is left inside the holding holes 10, 11 when the pins 8' are inserted therein, as it is preferred for all embodiments of the present invention.

In the sixth embodiment shown in Fig. 6, the pins 8' are formed as tabs integrally with the hinge piece from the same blank of sheet metal and extend in the plane of that blank. The side edge 14 of the abutment part 4 is in abutment with the front side surface 5 of the lens 1 and constitutes the abutment surface 7 of the hinge piece 2.

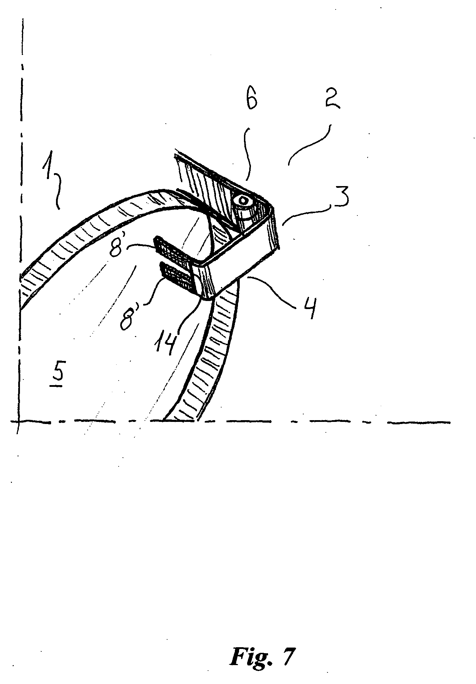

In the seventh embodiment shown in Fig. 7, the pins 8' are formed as tabs integrally with the hinge piece 2, and are bent to extend inwardly into the lens 1 and through the holding holes 10, 11 in the lens. The side edge 14 of the abutment part 4 between the two pins 8' is in abutment with the front side surface 5 of the lens 1 and constitutes the abutment surface 7 of the hinge piece 2.

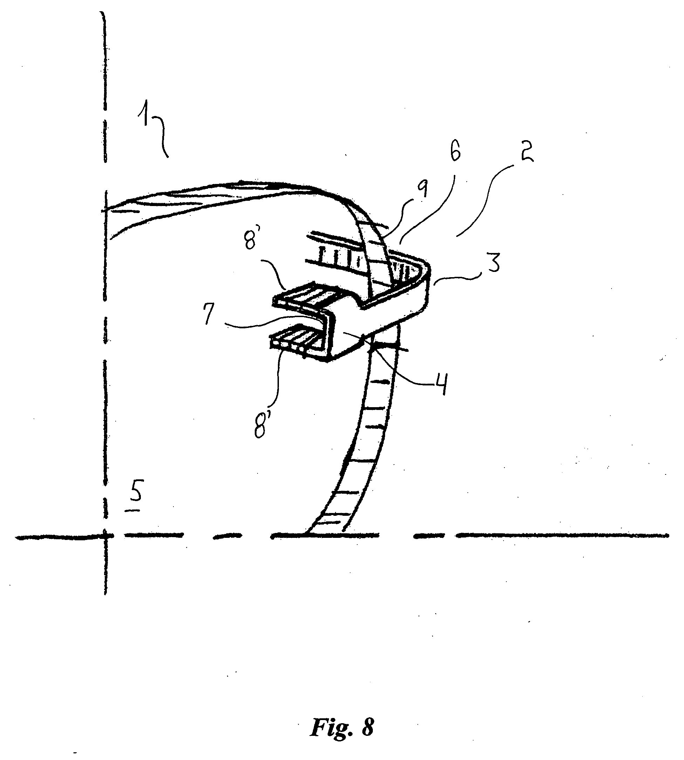

In Fig. 8, the pins 8' are likewise formed as tabs integrally with the hinge piece 2, and are bent to each their side to extend inwardly into the lens 1 and through the holding holes 10, 11 in the lens 1. The abutment surface 7 of the abutment part 4 between the two pins 8' is in abutment with the front side surface 5 of the lens 1.

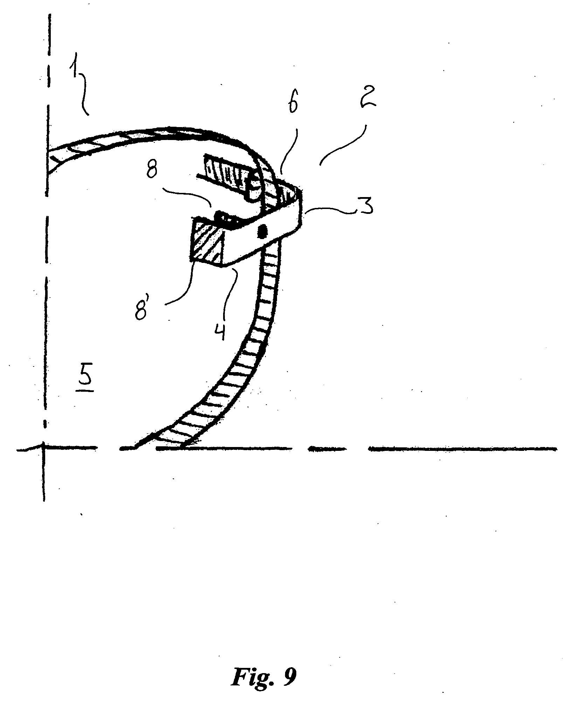

In the ninth embodiment of the present invention shown in Fig. 9, a simple hinge piece 2 is constructed from a blank of sheet metal, the end of which is bend to form a pin 8', whereas a second pin 8 is fastened to the abutment part 4 of the hinge piece 2 at a distance from said end so that the pin 8 extends from the abutment surface 7 and into the lens 1. The second pin 8 may be arranged between the outer side edge 9 of the lens 1 and the first pin 8', or it may be arranged closer to the bridge piece than the first pin or tab 8'.

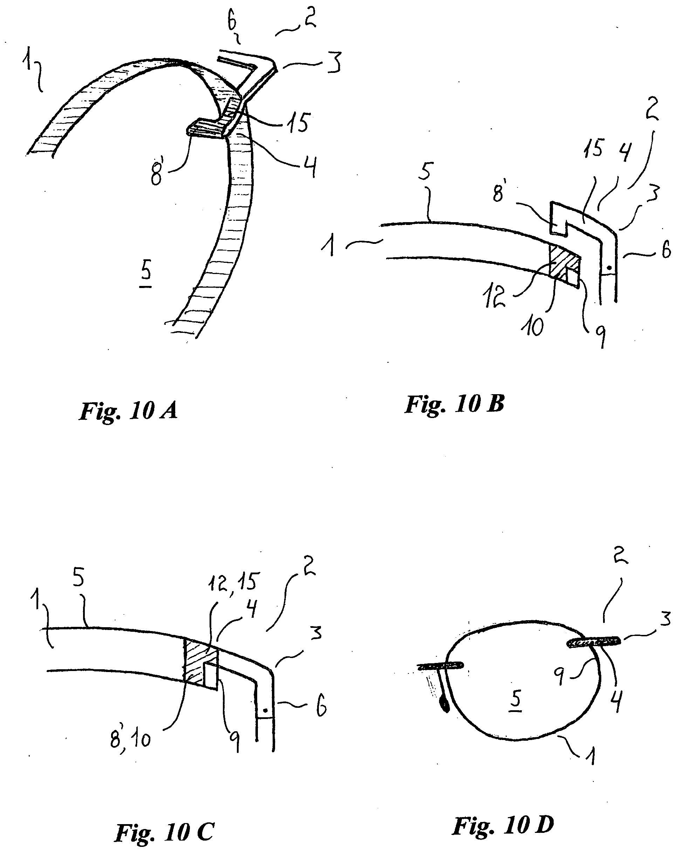

The tenth embodiment shown in Figs. 10A - 10D is yet another embodiment of a sheet metal hinge piece 2 connected to a lens 1 in accordance with the present invention, in which the hinge piece 2 comprises one pin 8' only extending from an abutment part 4, which is completely embedded in an indentation 12 in the lens. The pin is a tab 8' formed integrally with the remaining of the hinge piece 2 and is cut from a piece of sheet metal. The tab 8' is not bend and extends parallel to the abutment sides 15 of the abutment part 4. The abutment sides 15 of the abutment part 4 are rigidly connected to the inner side surfaces of the corresponding indentation 12 similarly to the connection between the pins 8, 8' and the holding holes 10, 11, i.e. preferably by a close fit, such as an interference fit, or by an adhesive. The contact area obtained between the hinge piece 2 and the lens 1 in this manner has proven to be sufficiently to substantially avoid formation of cracks and fracture due to excessive stresses. The indentation 12 in this particular embodiment is of a size so that the hinge piece 2 is flush with the front side surface 5 of the lens 1 as shown in Fig. 10C. When seen from the front side as shown in Fig. 10D, the hinge pieces 2 appears as a thin line, and this embodiment of the hinge piece 2 and the lens 1 provides for new advantageous design possibilities.

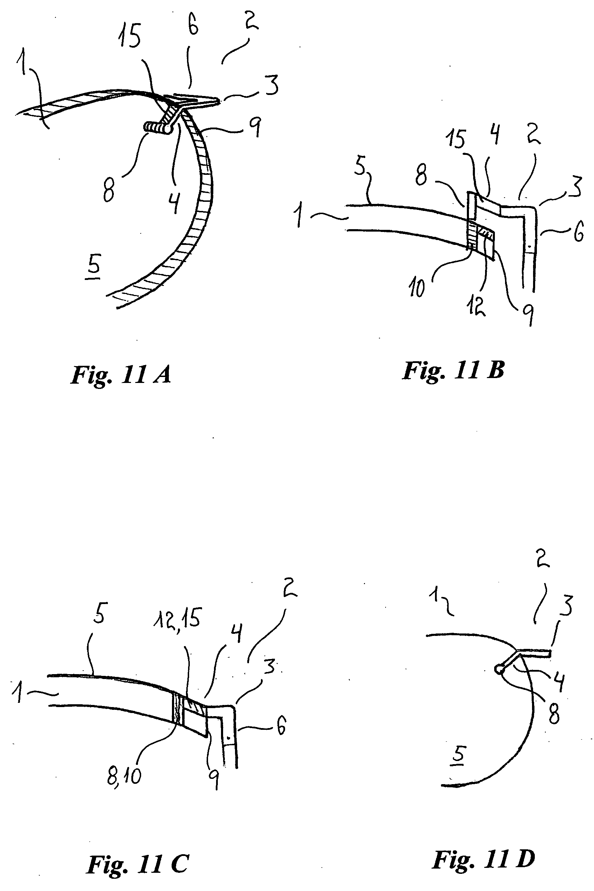

An eleventh embodiment is shown in Figs. 11A - 11D in which a pin 8 made from a round metal wire is soldered or glued to the end of a hinge piece 2 cut from sheet metal, so that the pin 8 extends parallel to the abutment sides 15 of the abutment part 4. The abutment sides 15 of the abutment part 4 are rigidly connected to the inner side surfaces of the corresponding indentation 12, which provides an effect as discussed with reference to the embodiment shown in Fig. 10.

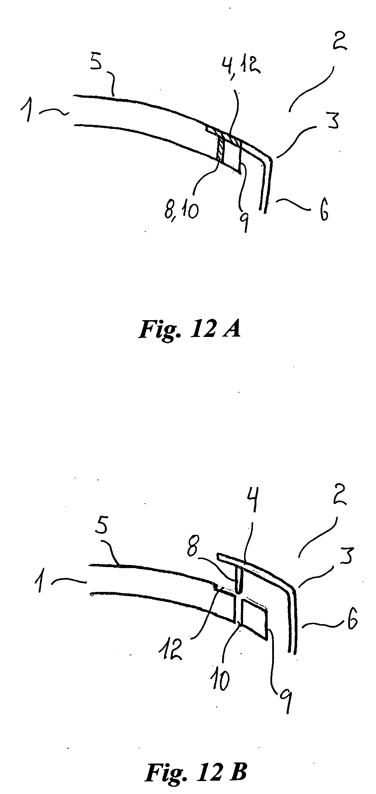

Figs. 12A and B show a twelfth embodiment, in which a pin 8 of round metal wire is soldered or glued to the abutment part 4 of the hinge piece 2 and the abutment part is embedded in an indentation 12 form in the front side 5 of the lens 1 so that the outer surface of the abutment part 4 is flush with the outer surface 5.

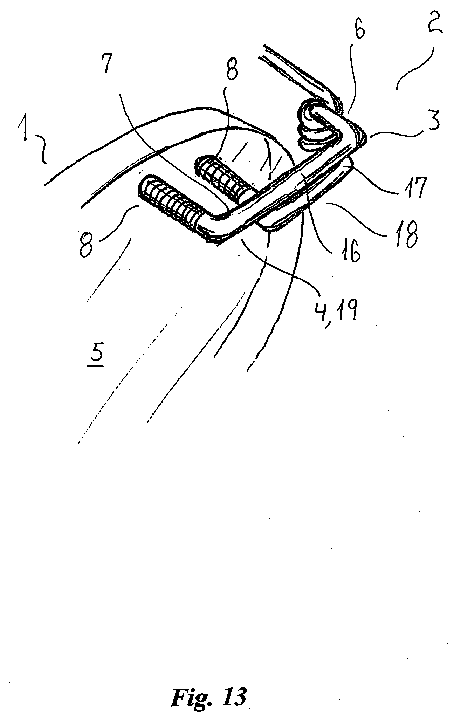

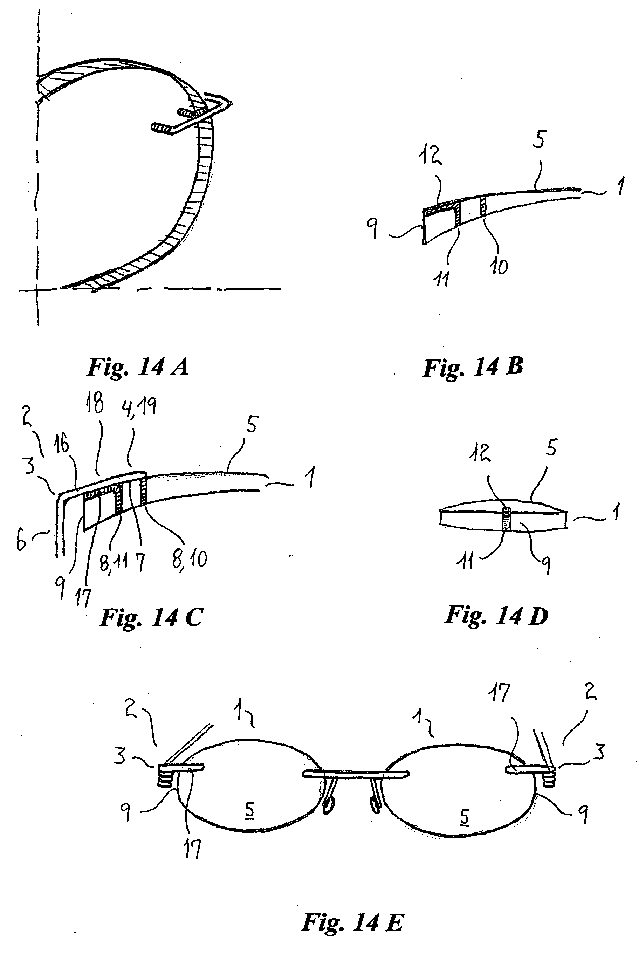

Two embodiments of a lens with a metal wire hinge piece of spectacles according to the present invention are shown in Figs. 13 and 14A - 14E.

The thirteenth embodiment shown in Fig. 13 comprises a hinge piece 2 made from two lengths of metal wire 16, 17 that extend parallel to the front side surface 5 of the lens 1 and which ends are bent to form pins 8 extending into corresponding holding holes 10, 11 of the lens 1. The two lengths of metal wire 16, 17 are jointed to each other along the distance 18 where they extend parallel to each other, e.g. by soldering or gluing, and the length of the first wire 16 that extends beyond the second wire 17 constitutes the abutment part 4 with the abutment surface 7 facing the lens 1.

In the fourteenth embodiment shown in Figs. 14A - 14E, the second wire 17 is arranged between the first wire 16 and the lens 1, so that the hinge piece 2 appears as a thin line as seen from the front side of the spectacles shown in Fig. 14E. An indentation 12 is provided in the lens 1 of a dimension so that the second wire 17 is accommodated in the indentation 12 whereas the part 19 of the first wire 16 extending beyond the second wire and parallel to the front side surface 5 of the lens 1 is in abutment with the side surface 5.

## Claims

1. Rimless spectacles comprising
a pair of lenses (1),
a bridge piece interconnecting the respective lenses (1),
a pair of hinge pieces (2) arranged at the outer side edges (9) of the two lenses (1), and
a pair of temples each having a hinge connecting element for connecting each temple to a respective hinge piece (2),
**characterised in that**
each hinge piece (2) comprises an abutment part (4) having an abutment surface (7, 14) extending parallel to and in substantial abutment with a side surface (5) of the respective lens (1),
that each respective lens (1) is provided with at least two holding holes (10, 11), which open to said side surface (5) thereof,
that at least two corresponding pins (8, 8') are fastened to the abutment part (4) of each hinge piece (2) and extend into said holding holes (10, 11) of the lenses (1), and
that the pins (8, 8') are rigidly connected to the inner side surfaces of the corresponding holes.

2. Rimless spectacles according to claim 1, wherein said pins (8, 8') extend from the abutment surface (7, 14) into the holding holes (10, 11).

3. Rimless spectacles according to claim 1 or 2, wherein said pins (8, 8') are in a close fit with the corresponding holding holes (10, 11).

4. Rimless spectacles according to claim 3, wherein the close fit is a transition fit or preferably an interference fit.

5. Rimless spectacles according to claim 3, wherein the close fit is a tapering fit.

6. Rimless spectacles according to claim 5, wherein the tapering fit is a conical fit.

7. Rimless spectacles according to any of the preceding claims, wherein an adhesive is provided between said pins (8, 8') and the inner side surfaces of the corresponding holes (10, 11).

8. Rimless spectacles according to any of the preceding claims, wherein an adhesive is provided between said abutment surface (7, 14) of the abutment part (4) and said side surface (5) of the respective lens (1).

9. Rimless spectacles according to any of the preceding claims, wherein said side surface is the front side surface (5) of the respective lens (1).

10. Rimless spectacles according to any of the preceding claims, wherein said holding holes (10, 11) extend from said side surface (5) of the respective lens (1) to the opposite side surface thereof.

11. Rimless spectacles according to any of the preceding claims, wherein said hinge pieces (2) are cut from sheet metal.

12. Rimless spectacles according to claim 11, wherein at least one of said pins is formed integrally with said hinge pieces (2) from a blank of sheet metal as tabs (8').

13. Rimless spectacles according to claim 12, wherein said tab or tabs (8') are bent to extend inwardly from the abutment surface (7) of the abutment part (4).

14. Rimless spectacles according to claim 12 or 13, wherein at least one of said pins (8) is made from metal wire, which is fastened to said abutment part (4).

15. Rimless spectacles according to any of the preceding claims, wherein each of said lenses (1) is provided with an indentation (12) in said side surface (5) thereof, the surface of which indentation (12) is in abutment with said abutment surface (7, 14) of the respective hinge piece (2).

16. Rimless spectacles according to claim 15, wherein the depth of said indentations (12) and the thickness of the hinge pieces (2) are of similar dimensions, so that the outer side surface of the hinge pieces (2) is substantially flush with said side surfaces (5) of the lenses (1).

17. Rimless spectacles according to any of the preceding claims, wherein the hinge pieces (2) are made from
a first metal wire (16) extending parallel to said side surface (5) of the respective lens (1), the outer end of the first metal wire (16) being bend to form a first pin (8) extending inwardly into a corresponding first holding hole (10) of the lens (1), and
a second metal wire (17) extending parallel to said first metal wire (16), the outer end of the second metal wire (16) being bend to form a second pin (8) extending inwardly into the corresponding second holding hole (11) of the lens (1),
wherein the first metal wire (16) and the second metal wire (17) are fastened to each other along the distance (18) they extend in parallel.

18. Rimless spectacles according to claim 17, wherein the second metal wire (17) extends between said side surface (5) of the respective lens (1) and said first metal wire (16).

19. Rimless spectacles according to claim 15 and to claim 18, wherein said indentation (12) is dimensioned to accommodate the second metal wire (17).

20. Rimless spectacles according to claim 19, wherein said indentation (12) is dimensioned so that the part of the first metal wire (16) extending beyond the second pin (8) and to the first pin (8) is in abutment with said side surface (5) of the respective lens (1).

21. A hinge piece (2) suitable for being arranged at the outer side edge (9) of a spectacle lens (1) and having an abutment part (4) with an abutment surface (7, 14, 15) extending parallel to a surface (5) of the intended lens (1), which hinge piece (2) is cut from sheet metal and comprises at least one pin(8, 8'), which extends from said abutment surface (7, 14, 15) and into a corresponding holding hole or holes (10, 11) of the intended lens (1) opening to said side surface (5) of the lens (1).

22. A hinge piece according to claim 21, where at least one of said pin or pins (8, 8') is formed integrally with the hinge piece (2) from a blank of sheet metal as a tab (8').

23. A hinge piece according to claim 22, wherein the at least one tab (8') is bent to extend inwardly from the hinge piece (2) relatively to the intended lens (1).

24. A hinge piece according to claim 22 or 23, comprising at least two of said tabs (8').

25. A hinge piece according to any of claims 21-24, comprising at least one pin (8) made from metal wire, which is fastened to said abutment part (4) and extends from said abutment surface (7, 14, 15) and into a corresponding holding hole or holes (10, 11) of the intended lens (1) opening to said side surface (5) of the lens (1).

26. A hinge piece according to any of claims 21, 22, 24 or 25, wherein the at least one pin (8, 8') extends in the plane of the abutment part (4) parallel to the side surfaces (15) thereof.

27. Rimless spectacles comprising
a pair of lenses (1),
a bridge piece interconnecting the respective lenses (1),
a pair of hinge pieces (2) according to any of claims 21-26 arranged at the outer side edges (9) of the two lenses (1), and
a pair of temples each having a hinge connecting element for connecting each temple to a respective hinge piece (2),
wherein each respective lens (1) is provided with at least one holding hole (10, 11), which opens to said side surface (5) thereof and corresponds to the at least one pin (8, 8') of the respective hinge piece (2), each respective lens (1) is provided with an indentation (12) in said side surface (5) thereof, the surface of which indentation (12) is in abutment with said abutment surface (7, 14, 15) of the respective hinge piece (2), and the pins (8, 8') are rigidly connected to the inner side surfaces of the corresponding holes (10, 11) and the abutment surfaces (7, 14, 15) are rigidly connected to the corresponding surfaces of the respective indentations (12).

28. Rimless spectacles according to claim 27, wherein the depth of said indentations (12) and the thickness of the abutment parts (4) are of similar dimensions, so that the outer side surface of the hinge pieces (2) is substantially flush with said side surfaces (5) of the lenses (1).

29. A hinge piece (2) suitable for being arranged at the outer side edge (9) of a spectacle lens (1), which hinge piece (2) is made from
a first metal wire (16) extending parallel to said side surface (5) of the intended lens (1), the outer end of the first metal wire (16) being bend to form a first pin (8) extending inwardly into a corresponding first holding hole (10) of the lens (1), and
a second metal wire (17) extending parallel to said first metal wire (16), the outer end of the second metal wire (17) being bend to form a second pin (8) extending inwardly into a corresponding second holding hole (11) of the lens (1),
wherein the first metal wire (16) and the second metal wire (17) are fastened to each other along the distance (18) they extend in parallel.

30. A hinge piece according to claim 29, wherein the second metal wire (17) extends between said side surface (5) of the intended lens (1) and said first metal wire (16).
